# EUROPEAN PATENT APPLICATION

(11) **EP 2 631 852 A1**
(43) Date of publication of application: **28.08.2013**
(21) Application number: 13156419.7
(22) Date of filing: 22.02.2013
(51) Int. Cl.: G06Q 10/00

(54) **Field collection device tracking**

(30) Priority: 23.02.2012 IN MU03762012
(71) Applicant: Tata Consultancy Services Limited, 400021 Mumbay (IN)
(72) Inventor: Mani, Jayasekar, 600045 Chennai (IN); Singh, Rajesh Ramnath, 400063 Mumbai (IN)
(74) Representative: Manitz, Finsterwald & Partner GbR

(57) **Abstract**

System(s) and method(s) for field collections and tracking of field collection devices are described herein. In an implementation, a field collection device tracking system (102) may authenticate a field collector based on login details received from a field collection device (104). Based on the authentication, the field collection device tracking system (102) may communicate information associated with a field collection activity for at least one customer to the field collection device (104). Subsequent to the communication of the information, the field collection device tracking system (102) may track a location of the field collection device (104) and monitor at least one status attribute of the field collection device (104). The at least one status attribute includes a battery status of the field collection device (104).

## Description

### TECHNICAL FIELD

The present subject matter relates, in general, to field collections and particularly, but not exclusively, relates to field collections and tracking of field collection devices in Banking, Financial Services and Insurance (BFSI).

### BACKGROUND

Financial institutions like banks offer a variety of services to people in small towns, cities and major metropolitan areas. Some of the services offered by banks include keeping and maintaining bank accounts, lending money to businesses and individuals, and offering savings schemes. A bank account is considered a must-have for most individuals, businesses and governments.

Field collections have become an integrated part in today's banking industries. In cases where banking customers becomes delinquent, whether for debt payments, paying installments of loans, or any other monetary transactions, the concerned bank typically engages a collection agency for payment collections. The collection agency deploys field collection personnel or field collectors, who perform door to door payment collections.

The field collectors typically have access to all the information regarding account details, addresses, amounts to be collected, and the like of the banking customers. Such information is given to the field collectors through printed sheets also known as Stat-Cards. The field collectors, on basis of the information on the Stat-Cards, visit the customers and collect the payments from each customer. A fixed number of customers are targeted by the field collectors for payment collections on a daily basis. In addition to payment collections, at times, customer feedback is also obtained and reported to the collection agency. The collection agency marks the performance of the field collectors based on the daily work of the field collectors as well as the customer feedback, if any.

### SUMMARY

This summary is provided to introduce concepts related to systems and methods for field collection and tracking of field collection devices and the concepts are further described below in the detailed description. This summary is neither intended to identify essential features of the claimed subject matter nor is it intended for use in determining or limiting the scope of the claimed subject matter.

In an embodiment of the present subject matter, a field collection device tracking (FCDT) system may receive login details associated with a field collector from a field collection (FC) device. The FCDT system may then authenticate the field collector based on the login details. In an implementation, the FCDT system may communicate information associated with the field collection, based on the authentication of the field collector. Subsequent to the communication of the information, the FCDT system may track the FC device based on a location attribute of the FC device. In another implementation, the FCDT system may be configured to monitor a status of the FC device based on status attributes associated with the FC device. The status attributes includes a battery status of the FC device.

### BRIEF DESCRIPTION OF DRAWINGS

The detailed description is provided with reference to the accompanying figures. In the figures, the left-most digit(s) of a reference number identifies the figure in which the reference number first appears. The same numbers are used throughout the drawings to reference like features and components.

Figure 1 illustrates a network environment for implementing a field collection device tracking system, according to an embodiment of the present subject matter.

Figure 2 illustrates the field collection device tracking system and a field collection device, according to an embodiment of the present subject matter.

Figure 3 illustrates a method for tracking field collection devices, according to an embodiment of the present subject matter.

Figure 4 illustrates a method for field collections, according to an embodiment of the present subject matter.

### DETAILED DESCRIPTION

The present subject matter related to methods and systems for field collections and tracking of field collection devices.

Financial institutions like banks, insurance companies, stock brokering companies etc. have evolved from simple monetary transactions with a few people to lending money and offering a variety of saving schemes to all classes of people. These financial institutions are in the business of giving loans or credits to debtors/customers in order to earn profits from interests paid by such debtors on the loan. However, due to various reasons a lot of debtors end up not paying back the loaned amount or installments of the loaned amount to the financial institutions, thereby resulting in bad debts. As a number of bad debts are huge, these financial institutions suffer huge losses. Therefore, the financial institutions have understood that profitability can be maintained only by managing debt collection effectively.

Conventionally, the financial institutions engage services of outside agencies, such as tele-calling agencies and collection agencies. In an example, the collection agencies employ a group of individuals working as field collectors who are assigned the task of following up with delinquent customers for the purposes of collection of the amount due. This approach allows the financial institutes to focus on their core business and the cumbersome task of following and collection is shifted to outside agencies. However, at the same time, the financial institutions often face various issues by engaging these collection agencies.

For example, for the purpose of collection, a bank may provide the details of the delinquent customers to the collection agencies. These details are often private and confidential details of the customers and the onus of safeguarding the same lies with the bank. If the collection agencies are not scrutinized properly, they may misuse these details resulting not only in loss of business for the bank but other damages like penalties that the bank may have to pay to customers who may sue the bank for breach of confidentiality.

Conventionally, the field collectors may be provided with the details of the customers on Stat-Cards. The Stat-Cards may have printed upon them customer details such as the customer name, customer address, customer account details and the like for the customers. The Stat-Cards may be misused or may be lost, causing inconvenience to the collection agency and the bank. In addition, the Stat-Cards may be issued by the bank and provided to the collection agency through physical or postal means in order to perform the process of field collections. Sending the Stat-Cards physically or by postal means may result in loss of the Stat-Cards and the customer details along with them.

Further, conventionally, a field collector may be allocated a number of customers to be targeted for field collections by the collection agency. The field collector may visit the targeted customers for field collections and report back to the collection agency with the collected payments and the customer feedbacks, if any. The allocation of customers to be targeted to the field collectors may be done on a daily basis. Following the conventional systems and methods for field collections, it is difficult to monitor the field collectors for field collections. For example, a field collector may be allocated four customers to target for a day. The field collector may not visit some of the customers and may report with false reasons of not collecting payments from those customers. The reason could be one or more from non-availability of a particular customer at the place, loss of Stat-Card, etc. With this, the reporting done by the field collectors at the collection agency may not be authentic and thus, the performance of the field collectors may be evaluated on false basis.

Further, the collection agency may be unaware of number of field collectors engaged in field collections for a particular day and thus monitoring of details pertaining to amount of money collected, number of customers targeted, and the like may be difficult for the collection agency.

Generally, in conventional methods of field collection, the field collectors, at the time of collection of payment from customers, may provide customers with a receipt indicating the details of transaction. For this, the field collectors may need to carry a receipt book provided by the collection agency or the bank. Each field collector should have a receipt book with receipts sufficient for the number of customers to be visited by him. Provision of receipts or receipt books keeping a track of the issuance of receipts to customers by the collection agency may be difficult. In addition, there may be a possibility of counterfeiting or forging of the receipts.

In the conventional method of field collections, the field collectors may perform field collections and report back, at the end of day, with all collected payments to the collection agency. Further, in an example, if a field collector has to target far-fetched remote locations, the field collector may report to the collection agency in more than one day. With the end-of-the-day reporting or delayed reporting, the updating of the field collections to the bank may not be in real-time and thus auditing of customer accounts may not be efficient.

Systems and methods for field collections and tracking of field collection devices are described herein.

In accordance with an implementation of the present subject matter, a system for field collections and tracking of field collection devices comprises of a field collection device tracking (FCDT) system and one or more field collection (FC) devices. The FCDT system may be configured to track the FC devices and monitor field collection activities of one or more field collectors carried out using the FC device associated with each of the field collectors. A field collector may be an individual, responsible for performing a field collection activity with the help of the FC device. The FC device may include a mobile computing and communication device, such as a mobile phone, a smart phone, a laptop, a personal digital assistant (PDA), and the like.

In an implementation, the FCDT system may authenticate a field collector for the purpose of the field collection activity. The authentication may be based on the login data entered by the field collector in his FC device to ensure that the authentic field collectors carry out the field collection activity. In an implementation, based on the authentication, attendance of the field collectors may be marked by the FCDT system.

In an implementation, for the purpose of authentication, the FCDT system may be configured to identify the FC device onto which the field collector is logging or the Subscriber Identification Module (SIM) in the FC device or both. The identification may be based on an FC device number and a SIM number communicated by the FC device to the FCDT system. In an implementation, the FCDT system may also be configured to identify a printer associated with the FC device. In an example, the FCDT system may identify the printer based on a printer number associated with the printer. The identification may be done to ensure that a field collector logs into the FC device and/or through the SIM that has been allocated to him. In an implementation, based on the identification, the number of FC devices that are on the field for the field collection activity may be determined.

Based on the authentication of the field collector, the FCDT system may allocate, to the field collector, at least one customer to be targeted for the field collection activity. For this, the FCDT system may send customer details, pertaining to the at least one customer, on to the FC device held by the field collector. In an example, the customer details may include customer name, customer address, customer account number, payment to be collected, saving scheme on offer and the like. In an implementation, the at least one customer may be allocated based on one or more predefined allocation parameters stored in the FCDT system. In an implementation, the predefined allocation parameters may include Account to Collector Ratio (ACR), Pin Ranking, Vintage Bands, Cycle Mapping, and the like.

In an implementation, the FC device and the FCDT system may be configured such that the field collector may be able to log into his FC device within a predefined time period in a day, and the authentication and/or the subsequent allocation of customers to the field collectors for the field collection activity may be done only between the predefined time period. It will be appreciated that the predefined time period may be defined in accordance with regulatory provisions, for example, formulated by administrative or government authorities. Such a provision may ensure that the field collectors perform their field collection activity based on regulations.

In an implementation, the FCDT system may be configured to track the field collector for the field collection activity. In an implementation, the FCDT system may track a real-time location of the FC device held by the field collector. The tracking of the real-time location of the FC device may be done through a conventional tracking system such as a Global Positioning System (GPS). Based on the tracking, the route and time taken by the field collector to reach the allocated customer may be determined. In addition, time taken by the field collector to perform the field collection activity with the allocated customer may also be determined. In an example, the route and time taken by the field collector to reach the allocated customer, and the time taken by the field collector to perform the field collection activity may be used to analyze a performance of the field collector.

Further, in an implementation, transaction details associated with the transactions done with the allocated customer may be entered in the FC device by the field collector. In an example, the transaction may include collection of payment from the customer and the associated transaction details may include amount collected, loan number, the account number to be credited or debited, and other details associated with the customer, such as customer identification details or signature. The transaction details may be communicated to the FCDT system and the FCDT system may validate the transaction details. Such a provision ensures that all transaction details are updated in the FCDT system at the time of transaction, which eliminates risks associated with auditing of customer accounts as well as delays in auditing of the customer accounts.

Based on the validation of the transaction details, the FCDT system may generate and send a receipt to the FC device, which can be issued to the customer by the field collector. In an implementation, the receipt may be printed using a printer communicatively coupled to the FC device and provided to the customer.

In an implementation, the FCDT system may remotely manage one or more FC devices associated with one or more field collectors. For the purpose of remote management, one or more status attributes of the FC device may be communicated to the FCDT system. The status attributes may include a battery status of the FC device, a signal strength status at the FC device and a software update status of the FC device. Based on the software update status, the software of the FC device may be updated by the FCDT system. Further, the information on battery status and signal strength status at the FCDT system may be utilized to check whether any field collector is falsely reporting 'no battery' and/or 'no signal' as a reason for not carrying out the field collection activity.

In one implementation, the FCDT system may be configured to re-allocate one or more customers of a particular field collector to another field collector. The re-allocation may be done on the basis of one or more predefined re-allocation parameters. In an example, in case a field collector is absent, customers to be originally targeted by that field collector in a particular day may be re-allocated to another field collector. This may facilitate in field collection activity being carried out despite of an absence of any field collector. In an implementation, the re-allocation parameters may include proximity parameters, attendance of field collectors and the like.

Further, the FCDT system may be configured to create one or more reports based on the tracking of the field collectors and the transaction details received from the FC devices. The reports may be used for determining performance and efficiency of the field collectors on a predefined basis, including daily basis, monthly basis and such. In an example, the report may be based on the field collection activity of the field collectors, the time taken by the field collectors to perform the field collection activity, the routes taken by the field collectors to perform the field collection activity, and the like. Furthermore, based on the performance and/or efficiency of the field collectors, training requirements for the field collectors may also be identified.

The above methods and systems are further described in conjunction with the following figures. It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

While aspects of the described systems and methods for field collections can be implemented in any number of different computing devices, environments, and/or configurations, the embodiments are described in the context of the following exemplary system(s) and method(s).

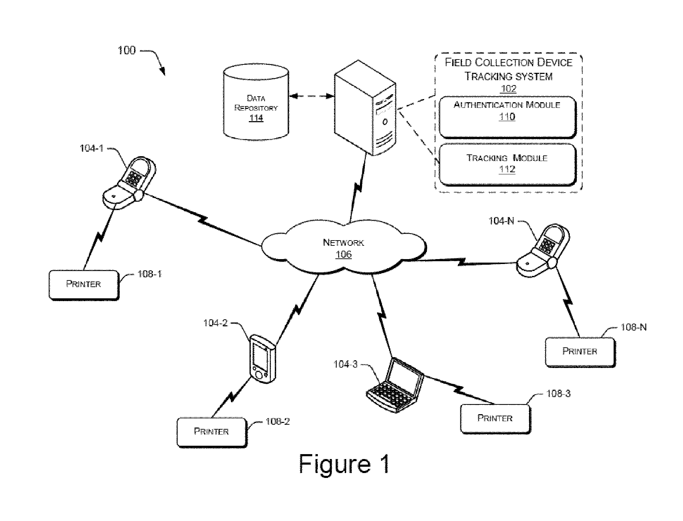

Figure 1 illustrates a network environment 100 implementing an FCDT system 102, according to an embodiment of the present subject matter. The network environment 100 includes at least one FCDT system 102 connected to one or more FC devices 104-1, 104-2... 104-N via a network 106. For the purpose of explanation and clarity, the field collection FC devices 104-1, 104-2... 104-N, are hereinafter collectively referred to as FC devices 104 and individually referred to as the FC device 104.

The network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and the like. The network 106 may either be a dedicated network or a shared network, which represents an association of the different types of networks that use a variety of protocols, for example, Hypertext Transfer Protocol (HTTP), or secure HTTPS, Transmission Control Protocol/Internet Protocol (TCP/IP), etc., to communicate with each other. Further, the network 106 may include network devices, such as network switches, hubs, and routers for providing a link between the FCDT system 102 and the FC devices 104. The network devices within the network 106 may interact with the FCDT system 102 and the FC device 104 through the communication links. In an implementation, the FC devices 104 and the FCDT system 102 may be configured to communicate with each other on an Access Point Name (APN) network. The APN network may be any dedicated telecommunication network having network switches, hubs and routers for providing a link between the FCDT system 102 and the FC device 104.

The FCDT system 102 may be implemented as any of a variety of conventional computing systems, for example, servers, a desktop PC, a notebook, a workstation, a mainframe computer, an Internet appliance hand-held devices, laptops, tablets or other portable computers, smart phones, mobile phones, and personal digital assistants (PDAs).

The FC devices 104 may be connected to a plurality of printers 108-1...108-N. In an implementation, the plurality of printers 108-1...108-N may be communicatively coupled to the FC devices 104 through wired interfaces or wireless interfaces. The plurality of printers 108-1...108-N may be collectively referred to as the printers 108 and individually referred to as the printer 108. The wireless interfaces in an example, may be Wi-Fi or Bluetooth™. The printers 108 may be any conventional machine used for printing. In an implementation, the printer 108 may be connected to the FC devices 104 via a network. Further, in one implementation, the printer 108 may be integrated with the FC device 104.

The FCDT system 102, amongst other components may comprise of an authentication module 110 and a tracking module 112. In an implementation, the authentication module 110 may be configured to authenticate a field collector based on login details received from the FC device 104, associated with the field collector. In an example, the login details may include a username, a password, an employee code, and the like associated with the field collector. The authentication module 110 may further be configured to identify the FC device 104 and/or the Subscriber Identification Module (SIM), associated with the field collector based on identification details obtained by the FC device 104. The identification details, in an example, may include an International Mobile Equipment Identity (IMEI) number, an International Mobile Subscriber Identity (IMSI) number, SIM number, and the like associated with the FC device 104 and the SIM. In an implementation, the identification details may further include printer number of the printer 108 associated with the FC device 104. In an implementation, the FCDT system 102 may identify the FC device 104 and/or the SIM associated with the field collector to ensure that the field collector logs in from the FC device 104 and/or the SIM allocated to him. The identification details and the login details for all the field collectors may be stored in a data repository 114.

In an implementation, the tracking module 112 of the FCDT system 102 may be configured to track the movement of the FC device 104. The tracking module 112 may track the movement of the FC device 104 based on at least one location attribute associated with the FC device 104. The location attribute, in an example, may comprise of geometrical co-ordinates of the location in which the FC device 104 is located. Further, based on the FC device 104, the tracking module 112 may also be configured to track a route and time taken by the field collector to reach a customer as well as time taken by the field collector to perform the field collection activity associated with the customer. The time taken by the field collector to reach the customer may be tracked based on a system time of the FCDT system 102. Furthermore, the route taken by the field collector to reach the customer may be tracked, in an example, by plotting a route map by connecting all geometrical co-ordinates of locations in which the FC device 104 moves.

For example, if a field collector, having the FC device 104, starts the field collection activity at point A, the FCDT system 102 may mark point A as the starting point for the field collector. Further, a system time of the FCDT system 102 at the instance when the field collector is starting from point A, may be marked as the starting time. Now, if the field collector moves from point A to point B, the route taken by the field collector may be tracked by tracking all geometrical co-ordinates between point A and point B. Further, the time taken by the field collector to reach point B may be based on the difference of a system time at point B and the system time at point A.

In another implementation, the tracking module 112 may further be configured to remotely monitor a status of the FC device 104 for the field collection activity. In an implementation, the status attributes may be received from the FC device 104 in real-time or on a periodic basis. In an example, the status attributes may include a battery status, a signal strength status, and a software update status associated with the FC device 104. In an implementation, the FCDT system 102 may perform actions based on the received status of the FC device 104. The actions may include remote updating of software of the FC device 104. In an example, the FCDT system 102 may receive periodic updates on the battery status and signal strength status of the FC device 104. Based on the battery status and the signal strength status, the FCDT system 102 may keep a check on false reports by the field collector stating "no signal" and/or "no battery" as a reason for not performing the field collection activity. Further, based on the status attributes, the FCDT system 102 may keep a check on unauthorized usage or tampering of the FC device 104.

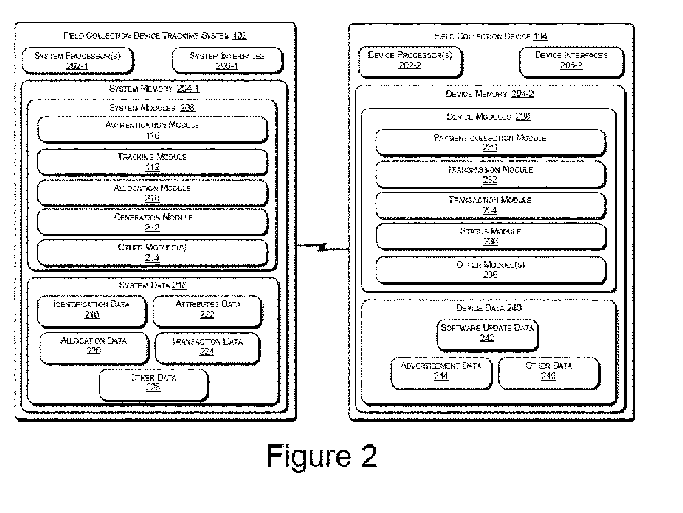

Figure 2 illustrates components of the FCDT system 102 and the FC device 104 according to an embodiment of the present subject matter to elaborate the details of the operation of the FCDT system 102. The FCDT system 102 and the FC device 104 as discussed previously may be implemented as various types of computing systems and/or communication devices. In one implementation, the FCDT system 102 and the FC device 104 include a system processor 202-1 and a device processor 202-2, respectively. The system processor 202-1 and the device processor 202-2 may be collectively referred to as processor 202.

The processors 202 may be implemented as one or more microprocessors, microcomputers, microcontrollers, digital signal processors, central processing units, state machines, logic circuitries, and/or any devices that manipulate signals based on operational instructions. Among other capabilities, the processor(s) are configured to fetch and execute computer-readable instructions stored in the memory.

The functions of the various elements shown in the figures, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The FCDT system 102 and the FC device 104 may further include one or more memory components, referred to as a system memory 204-1 and a device memory 204-2, coupled to the system processor 202-1 and the device processor 202-2, respectively. The system memory 204-1 and the device memory 204-2 are collectively referred to as memory 204. The memory can include any computer-readable medium known in the art including, for example, volatile memory (e.g., RAM), and/or non-volatile memory (e.g., EPROM, flash memory, etc).

Also, the FCDT system 102 and the FC device 104 include a system interface 206-1 and a device interface 206-2, respectively, which is collectively referred to as interfaces 206. The interface 206 may include a variety of software and hardware interfaces allowing the FCDT system 102 and the FC device 104 to interact with each other and with the several computing devices and/or network entities. Further, the interface(s) may enable the FCDT system 102 and the FC device 104 to communicate with other communication and computing devices, such as web servers and external repositories. The interface(s) 206 can facilitate multiple communications within a wide variety of networks and protocol types, including wired networks, for example LAN, cable, etc., and wireless networks such as WLAN, cellular, or satellite based.

In one embodiment, the system memory 204-1 includes system modules 208 including an allocation module 210, a generation module 212, and other module(s) 214 in addition to the authentication module 110 and the tracking module 112. Additionally, the system memory 204-1 includes system data 216 that serves, amongst other things, as a repository for storing data fetched, processed, received and generated by one or more of the system modules 208. The system data 216 includes, for example, identification data 218; allocation data 220; attribute data 222, transaction data 224 and other data 226. The other data 226 comprises data corresponding to one or more of the other module(s) 214.

Similarly the device memory 204-2 includes device modules 228 comprising a payment collection module 230, a transmission module 232, a transaction module 234, a status module 236 and other device module(s) 238. Further, the device memory 204-2 includes device data 240 that serves, in addition to other things, as a repository for storing data fetched, processed, received and generated by one or more of the device modules 228. The device data 240 includes, for example, software update data 242, advertisement data 244 and other data 246. The other data 246 comprises data corresponding to one or more of the other module(s) 238.

In an implementation, the payment collection module 230 is configured to receive login details from a field collector and send the login details to the FCDT system 102 for authentication of the field collector. As described earlier, the authentication module 110 of the FCDT system 102 authenticates the field collector. For the purpose of authentication, the authentication module 110 may use and compare login details associated with all the field collectors stored in the data repository 114. In an implementation, the FCDT system 102 is configured to mark an attendance of the field collectors based on the login details and the authentication.

In another implementation, the payment collection module 230 is configured to send identification details of the FC device 104, the printer 108 coupled with the FC device 104 and/or the SIM to the FCDT system 102. The identification details may include, as previously mentioned, the IMEI number, the IMSI number, the SIM number, the printer number of the printer 108 and the like. As described earlier, the authentication module 110 of the FCDT system 102, for the purpose of authentication of the field collector, may identify the FC device 104 and/or the SIM of the FC device through which the field collector is logging in. In an implementation, the identification details of all the FC devices 104 and all the SIMs may be stored in the date repository 114, which may be used for the identification.

In an implementation, the identification details received by the FCDT system 102 may be stored in the identification data 218. With this, the FCDT system 102 may be able to monitor the number of FC devices 104 and/or the SIMs present in the field for field collection activity.

In one implementation, the FCDT system 102 may send a message regarding successful authentication of the field collector to the FC device 104. After successful authentication of the field collector by the FCDT system 102, the transmission module 232 of the FC device 104 may send a request to the FCDT system 102 for obtaining customer details for the field collection activity.

In an implementation, upon receiving the request for obtaining the customer details, the FCDT system 102 may send the customer details of at least one customer to the FC device 104. In an implementation, the allocation module 210 may be configured to allocate the customers to the field collector and send the customer details for the allocated customers to the FC device 104. The allocation module 210 may allocate the customers to the field collector based on allocation parameters. The allocation parameters may include Account to Collector Ratio (ACR), End Net Receivable, Vintage Bands, and the like. In an example, when a request for obtaining customer details is received by the FCDT system 102, from the FC device 104, the allocation module 210 may allocate the customers to the field collector and send the customer details to the FC device 104 based on a comparison of number of the customers to be targeted and number of the field collectors present on field.

In another implementation, the allocation module 210 may also be configured to re-allocate the customers from one field collector to another field collector. The re-allocation may be done in case a field collector, to whom a customer is to be originally allocated for the field collection activity, is absent. The allocation module 210 may be configured to re-allocate a customer to a field customer dynamically, i.e., on the field. The re-allocation may be done based on re-allocation parameters. The re-allocation parameters may include attendance of the field collectors, proximity parameters, and the like. For example, if a particular field collector is absent, his customer-to-be-targeted may be re-allocated to another field collector who is present on field and/or who is in a predefined close proximity of the customer.

In an implementation, customer details may be sent from the FCDT system 102 to the FC device 104 within a predefined time period. Such a provision may ensure that the collection agency and the concerned bank, engaging field collectors for the field collection activity, adhere to regulatory authorities. For example, the Reserve Bank of India (RBI) may have a guideline issued to banks and collection agencies that the field collection activity may only be done between 7 AM to 7 PM. The allocation module 210 may be configured to provide the FC device 104 with the customer details for field collection activity within a fixed time period ensuring that adherence to regulatory authorities may be observed.

In one implementation, at the instance when the FCDT system 102 receives the request from the FC device 104 for obtaining the customer details, the tracking module 112 of the FCDT system 102 may start tracking movements of the FC device 104 as described earlier.

In an example, subsequent to the obtaining of customer details by a field collector on his FC device 104, the field collector may start the field collection activity by visiting customers for which the customer details are received. As already described, the starting point of work for the field collector may be marked by the tracking module 112. In an embodiment, the tracking module 112 may be configured to track a path and time taken by the field collector to reach the customers. In an example, the tracking module 112 may track the path taken by the field collector by plotting a route map of the movement of the FC device 104. The route map, in an example, may be plotted by joining all geometrical co-ordinates for locations in which the FC device 104 moves. In an implementation, the tracking module 112 may further be configured to determine a time taken by the field collector to perform the field collection activity associated with the customer.

In an implementation, the FC device 104 may have a digital identification card of the field collector pre-stored therein. The digital identification card may have details of the field collector like the field collector name, employee code, phone number, and the like. The customer may verify the field collector, based on the digital identification card before any field collection activity is performed.

In an implementation, the field collector may perform a transaction with a customer during the field collection activity. The transaction, in an example, may include payment collection, promise to purchase (PP), delivery of a new product, and the like. The field collector, in an example, may enter details associated with the transaction into the FC device 104. In an example where the transaction is for a payment collection, the transaction details may include amount received, amount leftover, customer signature and the like. The transaction details entered in the FC device 104 may be communicated by the transaction module 234 in real-time to the FCDT system 102, and the FCDT system 102 may validate the transaction details. Such a provision ensures that all details may be updated onto a bank legacy system in real time hence eliminating problems associated with auditing of accounts.

In an implementation, if a customer wishes to make payment through a cheque, the field collector may take an image of the cheque with an image capturing device, such as a camera, of the FC device 104. The image may then be sent to the FCDT system 102 by the transaction module 234 for data entry and validation. In an example, if the cheque issued by the customer is dated post to a due date of payment, the FCDT system 102 may send an alert on the FC device 104 stating that the cheque given by the customer is of post-due date and hence not valid. Thus, the field collector may ask the customer to issue a new cheque of a prior date or to make the payment in cash.

In an implementation, the transaction details may be stored in the FCDT system 102 as the transaction data 224. In an example, the generation module 212 may be configured to generate a receipt based on the details of the transactions obtained from the FC device 104. The receipt, in an example, may be indicative of validation of the transaction by the FCDT system 102. In an implementation, the generation module 212 may further be configured to send the generated receipt to the FC device 104 over the network 106. The receipt, after being received by the FC device 104, may be printed by the printer 108 communicatively coupled to the FC device 104 and handed over to the customer by the field collector. In an implementation, as and when the receipt is generated by the generation module 212, the legacy system of the bank may be updated in real time about the transaction.

In an implementation, the advertisement data 244 may include data related to products that the bank or the collection agency may want to advertise. In an example, the advertisement data 244 may include data related to saving schemes, policies, on the spot offers, and the like. In an example, the advertisement data 244 may be stored in the form of texts, audios and videos in different languages. The field collector, in an example, may display the advertisement data 244 to the customer during the field collection activity. If the customer wishes to avail an offer advertised by the field collector, the field collector may send a request, through the FC device 104, to the FCDT system 102 requesting for further information, including a form for the customer to fill-in, for the offer. The FCDT system 102, in response to the request from the FC device 104, may send a digital image of the form in real time to the FC device 104. The form may be filled and signed by the customer and the FC device 104 may send the form back to the FCDT system 102 for data entry and validation. The advertisement of offers, schemes, and the like in real time may increase the profitability of the bank.

In an implementation, the field collector may gather a feedback from the customer after performing the transaction. The feedback may include customer comments, field collector ratings, customer suggestions, and the like. In an implementation, the customer's feedback may be entered in the FC device 104 held by the field collector. The feedback from the customer may be communicated by the transaction module 234 of the FC device 104 to the FCDT system 102, which may be used for a variety of purposes, including implementing measures for enhancing quality of service in real-time and evaluating performance of the field collector.

In an embodiment, the generation module 212 of the FCDT system 102 may be configured to create one or more reports based on the field collection activity of the field collectors. The reports may be created based on the transaction details, received by the FCDT system 102, to monitor the field collection activity, along with field collection targets achieved, on periodic basis.

In an implementation, the reports may be created to evaluate and monitor performance of the field collectors. The report may be based on the tracking details including the time and the path taken by the field collector for performing the field collection activity, field collection details including number of customers targeted, number of products advertised, and customer feedbacks, as received from the customers, for the transactions performed by the field collectors. In an implementation, the reports may be created in real time or the report may also be generated on daily, weekly and/or yearly basis. The performance of the field collector may be identified, in an example, by analyzing the reports based on conventional analysis techniques such as ABU analysis, Promise to Pay (VCP) analysis, Daily Collection Report (DCR) analysis, etc. Furthermore, the report may also be used for identifying training requirements for the field collector. Further, in an implementation, the reports may be obtained by the legacy system of the concerned bank from the FCDT system 102.

In one embodiment, the status module 236 may be configured to communicate status attributes associated with the FC device 104 to the FCDT system 102. The status attributes may include a battery status and a signal strength status. In an implementation, the status attributes may be stored in the FCDT system 102 as the attribute data 222. The status attributes, in an example, may be monitored by the tracking module 112 in real time or on a periodic basis, as already mentioned. The battery status may be indicative of the remaining battery life of the FC device 104. Further, the signal strength may be indicative of a quality of communication between the FC device 104 and the FCDT system 102 over the network 106. In an implementation, the tracking module 112 may keep a track on the battery status and the signal strength status in order to ascertain that the field collector does not forge his daily report at the collection agency by stating that the field collection activity could not be carried out due to low battery and/or poor signal strength.

In another implementation, the status module 236 may be configured to communicate the software update status of the FC device 104 to FCDT system 102. As mentioned earlier, the tracking module 112 may perform periodic or real-time checks on the software update status of the FC device 104 and may perform updates accordingly. The software updates may be stored in the FC device 102 as the software update data 242. Further, troubleshooting of problems associated with the FC device 104 may also be done by the tracking module 112.

In another implementation, the tracking module 112 may be configured to erase data present in the FC device 104 in case a theft of the FC device 104 has been reported. For example, during the field collection activity, if the FC device is lost by the field collector unintentionally, the tracking module 112 may delete all the data that may be present on the FC device 104, as soon as the field collector reports the loss to the collection agency. Such a provision may ensure that important customer information is not shared and misused. Further, an update regarding loss of the FC device 104, along with the IMEI number of the lost FC device 104 and the SIM number of the lost SIM, may be sent to FCDT system 102 and/or the data repository 114.This update may allow the FCDT system 102 to keep a track of lost FC devices 104 and/or lost SIMs.

In one implementation, the FC device 104 may be configured or hardened to process and execute only applications related to the field collection activity. The hardening may not allow the field collector to execute other applications, such as calling, SMSing, browsing, sharing of data, and such for any purpose other than that of the field collection activity.

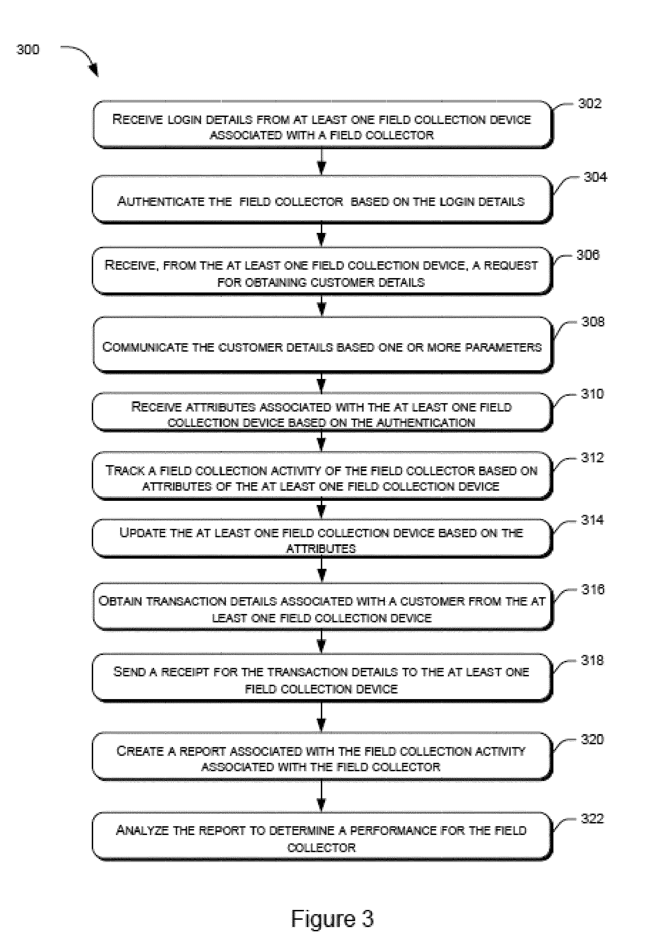

Figure 3 illustrates a method 300 for tracking field collection devices, according to an embodiment of the present subject matter. According to an aspect, the concepts of tracking of field collection devices are described with reference to the FC device 104.

The method(s) may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the method, or an alternative method. Additionally, individual blocks may be deleted from the methods without departing from the spirit and scope of the subject matter described herein. Furthermore, the method can be implemented in any suitable hardware, software, firmware, or combination thereof.

Referring to figure 3, at block 302, the FCDT system 102, may receive login details from the FC device 104 associated with the field collector. As already described, the login details may be received for authentication of the field collector. In another implementation, identification details associated with the FC device 104 and the SIM may also be obtained by the FCDT system 102. In an example, the identification details may include IMEI number, IMSI number, SIM number and the like for the FC device 104.

At the block 304, the FCDT system 102 may authenticate the field collector based on the received login details. In an implementation, the authentication of the field collector may be done by the authentication module 110. In another implementation, the authentication may further be based on the identification details associated with the FC device 104. The authentication, in an example, may be done by the authentication module 110 based on a comparison of the identification details and the login details received from the FC device 104 to the identification details and login details stored in the data repository 114, as described earlier.

At the block 306, the FCDT system 102 may receive, from the FC device 104, a request for obtaining information associated with customers or customer details, for performing the field collection activity. The customer details may include customer attributes and account attributes. The customer attributes, in an example, may include details like customer address, customer name, amount to be collected, and the like. Further, the account attributes may include customer account number, loan number, and the like.

At the block 308, the customer details may be communicated to the FC device 104. In an implementation, the customer details may be communicated based on the authentication of the field collector by the FCDT system 102. The communication of the information, by the FCDT system 102, may further be based on one or more parameters. In an example, the parameters may include allocation parameters and re-allocation parameters, as already mentioned. In an implementation, the parameters may be pre-stored in the data repository 114. In another implementation, the information may be communicated to the FC device 104 by the allocation module 210.

At the block 310, the FCDT system 102 may receive, from the FC device 104, attributes associated with the FC device 104. The attributes may be received based on the authentication of the field collector. In an implementation, the attributes associated with the FC device 104 may include a location attribute and status attributes. In an example, the location attribute may include geometrical coordinates of the location in which the FC device 104 is located. Further, the status attributes may include, as already mentioned, the battery status, the signal strength status and the software update status of the FC device 104.

At the block 312, the FCDT system 102 may start tracking the field collection activity of the field collector based on attributes of the FC device 104. In an implementation, the tracking may be done by the tracking module 112. In an example, the tracking module 112 may track the location of the FC device 104 in order to determine the route taken by the field collector to perform the field collection activity. Further, the tracking module 112 may also determine the time taken by the field collector to perform the field collection activity.

In another implementation, the tracking module 112 may monitor the status of the FC device 104 based on the received status attributes. At the block 314, the tracking module 112 may update the FC device 104 based on the received status attributes. In an example, the updating of the FC device 104 may be done at any point in the method 300-1. In an example, the software updates may be performed periodically or in real time.

At the block 316, the FCDT system 102 may obtain transaction details, associated with a customer, from the FC device 104. In an example, the transaction details may include information about payments collected, promise to purchase (PP), customer signature, and the like. In an implementation, if a customer wishes to make payment through a cheque, an image of the cheque may also be received from the FC device 104. In an implementation, the transaction details may be stored in the FCDT system 102 as the transaction details 224.

At the block 318, a receipt, based on the received transaction details, may be generated and sent to the FC device 104. In an implementation, the receipt may be generated and sent to the FC device 104 by the generation module 212. The receipt, in an example, may be generated by the generation module 212 after the transaction details are validated by the FCDT system 102. In another implementation, as the receipt is generated by the generation module 212, the FCDT system 102 may update a legacy system of the concerned bank with the transaction details.

At block 320, the FCDT system 102 may create a report associated with the field collection activity of a field collector. In an implementation, the report may be based on the transaction details, number of customers targeted, number of Promise to Purchase (PP), route taken by the field collector for performing the field collection activity, time taken by the field collector for performing the field collection activity, and the like. In an implementation the report may be created based on category, products, region, collection agency, number of field collectors, date, and the like.

At block 322, the report may be analyzed by the FCDT system 102 for determining a performance of the field collector. In an example, if a field collector is allocated three customers for a day and the field collector was only able to perform the field collection activity with two customers, the report may determine the performance of the field collector based on number of customers allocated and number of customers targeted. In an implementation, the report may be analyzed based on conventional analysis techniques like ABU analysis, Visits, Contacts and Promise to Pay (VCP) analysis, and Daily Collection Report (DCR) analysis. The report, in an implementation, may also determine training requirements for the field collectors based on the performance of the field collector.

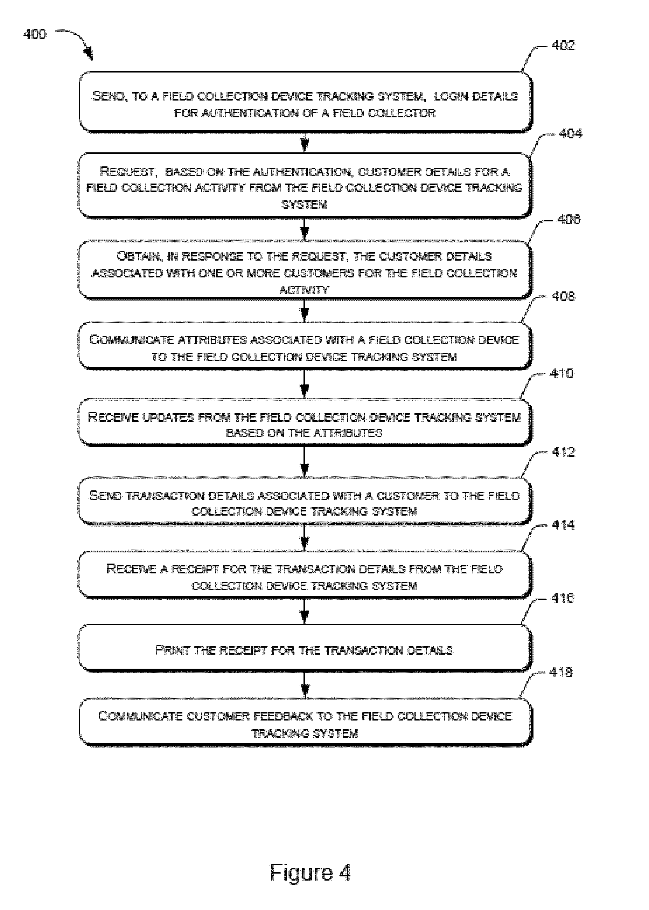

Figure 4 illustrates a method 400 for field collections, according to an embodiment of the present subject matter.

Referring to figure 4, at block 402, the FC device 104 may send login details associated with a field collector to the FCDT system 102. In an implementation, the login details may be sent to the FCDT system 102 by the payment collection module 230. In another implementation, the payment collection module 230 may further be configured to provide the identification details associated with the FC device 104 to the FCDT system 102. In an example, the payment collection module 230 may receive an authentication success message from the FCDT system 102.

At the block 404, a request may be sent to the FCDT system 102 for obtaining information associated with customers or customer details for performing the field collection activity. As already described, the information associated with the customers may include the customer attributes like customer name, customer address, customer identification, etc. and the account attributes like account number, loan number, etc. In an implementation, the request for obtaining the information associated with the customers may be sent to the FCDT system 102 by the payment collection module 230.

At the block 406, the information associated with the customers may be obtained in response to the request. In another implementation, the information associated with the customers may be obtained by the payment collection module 230.

At the block 408, attributes associated with the FC device 104 may be communicated to the FCDT system 102. In an example, the attributes may include status attributes and a location attribute associated with the FC device 104. In an implementation, the location attribute may be indicative of a geometrical coordinate of a location in which the FC device 104 may be located. Further, as already explained, the status attributes may include the battery status, the signal strength status and the software update status of the FC device 104. In another implementation, the location attribute may be communicated by the transmission module 232. Further, the status attributes may be communicated by the status module 236.

At the block 410, the FC device 104 may receive updates based on the communicated attributes. In an implementation, the updates may be received at any point while the field collection activity is performed by the field collector.

At the block 412, the transaction details associated with a customer may be sent to the FCDT system 102. In an implementation, the transaction details may be sent by the transaction module 234. The transaction details, as already mentioned, may include information about payments collected, promise to purchase (PP), products delivered, and the like.

At the block 414, a receipt based on the transaction details associated with the customer may be received from the FCDT system 102. In an implementation, the receipt may be indicative of a validation of the transaction details by the legacy system of the concerned bank.

At the block 416, the receipt based on the transaction details associated with the customer may be printed through the FC device 104. In an implementation, the receipt may be printed via the printer 108 communicatively coupled to the FC device 104. The receipt may then be provided to the customer by the field collector.

At the block 418, customer feedback associated with the transactions may be obtained and communicated to the FCDT system 102. In an implementation, the customer feedback may be communicated to the FCDT system 102 by the transaction module 234. In an implementation, the customer feedback may be used by the FCDT system 102 for determining the performance and the training requirements of the field collector.

Although embodiments for methods and systems for field collections and tracking of field collection devices have been described in a language specific to structural features and/or methods, it is to be understood that the invention is not necessarily limited to the specific features or methods described. Rather, the specific features and methods are disclosed as exemplary embodiments for field collections and tracking of field collection devices.

## Claims

1. A method for tracking at least one field collection device (104), the method comprising:
receiving login details from the at least one field collection device (104) associated with a field collector;
authenticating the field collector for a field collection activity based on the login details;
communicating information associated with the field collection activity for at least one customer, wherein the communicating is based on the authentication;
tracking a location of the at least one field collection device (104); and
monitoring at least one status attribute of the at least one field collection device (104), wherein the at least one status attribute comprises a battery status of the at least one field collection device (104).

2. The method as claimed in claim 1 further comprising obtaining at least one identification detail of the at least one field collection device (104), and a Subscriber Identification Module, and wherein the authentication is based on the at least one identification detail.

3. The method as claimed in claim 1 further comprising marking an attendance of the field collector based on the login details.

4. The method as claimed in claim 1, wherein the communicating is further based on at least one allocation parameter, and wherein the at least one allocation parameter comprises one of an Account to Collector Ratio (ACR), End Net Receivable (ENR), Vintage Bands, Bucket and Cycle Mapping, and Pin Ranking.

5. The method as claimed in claim 1, wherein the communicating is further based on at least one re-allocation parameter, and wherein the at least one re-allocation parameter comprises at least an attendance of the field collector.

6. The method as claimed in claim 1, wherein the communicating is within a pre-defined time range.

7. The method as claimed in claim 1, wherein the information associated with the field collection activity comprises at least one customer identification attribute and at least one account attribute associated with the at least one customer.

8. The method as claimed in claim 1, wherein the at least one status attribute further comprises one of a signal strength at the at least one field collection device (104) and a software update status of the at least one field collection device (104).

9. The method as claimed in claim 1 further comprising receiving a feedback from the at least one customer.

10. The method as claimed in claim 9 further comprising determining a performance factor associated with the field collector based on the feedback.

11. A system (102) for tracking at least one field collection device (104) comprising:
a processor (202-1); and
a memory (204-1) coupled to the processor (202-1), the memory comprising:
an authentication module (110) configured to:
receive login details from the at least one field collection device (104) associated with a field collector; and
authenticate the field collector for field collection activity based on the login details;
an allocation module (210) configured to communicate information associated with the field collection activity for at least one customer, wherein the communication is based on the authentication; and
a tracking module (112) configured to:
track a location of the at least one field collection device (104); and
monitor at least one status attribute of the at least one field collection device (104), wherein the at least one status attribute comprises a battery status of the at least one field collection device (104).

12. The system (102) as claimed in claim 11, wherein the tracking module (112) is further configured to determine:
a route and time taken by the field collector to reach the at least one customer;
and
time taken by the field collector for the field collection activity associated with the at least one customer.

13. The system (102) as claimed in claim 11 further comprising a generation module (212) configured to:
obtain, from the at least one field collection device (104), at least one transaction detail associated with the at least one customer; and
send a receipt, to the at least one field collection device (104), based on the at least one transaction detail.

14. The system (102) as claimed in claim 13, wherein the generation module (212) is further configured to:
create a report based on the at least one transaction detail; and
determine a performance factor associated with the field collector based on the report.

15. A computer-readable medium having embodied thereon a computer program for executing a method comprising:
sending, to a system (102) for tracking at least one field collection device (104), login details of a field collector for authentication;
requesting for information associated with a field collection activity based on the authentication;
obtaining, in response to the request, the information associated with the field collection activity for at least one customer;
communicating a location attribute and at least one status attribute associated with the at least one field collection device (104), wherein the at least one status attribute comprises a battery status.
